# EUROPEAN PATENT APPLICATION

(11) **EP 4 800 079 A1**
(43) Date of publication of application: **02.09.2026**
(21) Application number: 24882147.2
(22) Date of filing: 07.10.2024
(51) Int. Cl.: C09D 11/101, B41J 2/01, B41M 5/00, C09D 11/322

(54) **ACTIVE ENERGY RAY-CURABLE YELLOW INK AND IMAGE RECORDING METHOD**

(30) Priority: 27.10.2023 JP 2023184792
(71) Applicant: FUJIFILM Corporation, Tokyo 106-8620 (JP)
(72) Inventor: ISHIZAKA, Soji, Ashigarakami-gun, Kanagawa 258-8577 (JP); UMEBAYASHI, Tsutomu, Ashigarakami-gun, Kanagawa 258-8577 (JP)
(74) Representative: HGF
(86) International application number: PCT/JP2024/035850
(87) International publication number: WO 2025/089030

(57) **Abstract**

There are provided an active energy ray-curable yellow ink and an application thereof, the active energy ray-curable yellow ink including: at least one yellow pigment selected from the group consisting of PY 110 and PY 184; a polymerizable monomer A that contains a nitrogen atom and has a glass transition temperature higher than 60°C in a case where the polymerizable monomer A is set as a homopolymer; and a polymerizable monomer B that is a monofunctional polymerizable monomer and has a glass transition temperature of 60°C or lower in a case where the polymerizable monomer B is set as a homopolymer, in which a total content of the polymerizable monomer A and the polymerizable monomer B is 50% by mass or more with respect to a total amount of the active energy ray-curable yellow ink, and Mp/D is 1.0 to 2.0.

## Description

### BACKGROUND OF THE INVENTION

### 1. Field of the Invention

The present disclosure relates to an active energy ray-curable yellow ink and an image recording method.

### 2. Description of the Related Art

In recent years, studies have been conducted on an active energy ray-curable yellow ink.

For example, WO2008/038508A describes that, in a yellow ink containing each of a pigment, a reactive monomer and/or a reactive oligomer, and a photopolymerization initiator, the pigment is C. I. Pigment Yellow 184 and/or C. I. Pigment Yellow 42.

In addition, JP2017-149811A describes a radiation-curable ink jet composition containing a specific monomer A, a trifunctional or lower urethane (meth)acrylate oligomer, and an N-vinyl compound.

### SUMMARY OF THE INVENTION

For a yellow image recorded using an active energy ray-curable yellow ink, it may be required to improve weather fastness (that is, long-term weather fastness) after a long period of time while maintaining color developability as a yellow pigment. The weather fastness generally refers to a property of being less likely to deteriorate in a case of being used outdoors. In particular, in the long-term weather fastness, fading resistance (a property of being less likely to fade), crack resistance (a property of being less likely to cause cracks on an image surface), and blocking resistance (a property of being less likely to cause stickiness on the image surface) are required. In the long-term weather fastness, further improvement is required as compared with the weather fastness in the related art.

An object of an embodiment of the present disclosure is to provide an active energy ray-curable yellow ink and an image recording method, with which it is possible to record a yellow image having excellent fading resistance, crack resistance, and blocking resistance after a long period of time while maintaining color developability as a yellow pigment.

The specific means for achieving the objects includes the following aspects.
<1> An active energy ray-curable yellow ink comprising:
   at least one yellow pigment selected from the group consisting of Pigment Yellow 110 and Pigment Yellow 184;
   a polymerizable monomer A that contains a nitrogen atom and has a glass transition temperature higher than 60°C in a case where the polymerizable monomer A is set as a homopolymer; and
   a polymerizable monomer B that is a monofunctional polymerizable monomer and has a glass transition temperature of 60°C or lower in a case where the polymerizable monomer B is set as a homopolymer,
   in which a total content of the polymerizable monomer A and the polymerizable monomer B is 50% by mass or more with respect to a total amount of the active energy ray-curable yellow ink, and
   in a case where a content of the yellow pigment with respect to the total amount of the active energy ray-curable yellow ink is denoted by Mp and a specific gravity of the yellow pigment is denoted by D, Mp/D is 1.0 to 2.0.
<2> The active energy ray-curable yellow ink according to <1>,
   in which a content of the polymerizable monomer A is 10% by mass to 30% by mass with respect to the total amount of the active energy ray-curable yellow ink.
<3> The active energy ray-curable yellow ink according to <1> or <2>,
   in which a weighted average value of glass transition temperatures in a case where each of all polymerizable monomers contained in the active energy ray-curable yellow ink is set as a homopolymer is 20°C to 70°C.
<4> The active energy ray-curable yellow ink according to any one of <1> to <3>,
   in which a weighted average value of glass transition temperatures in a case where each of all polymerizable monomers contained in the active energy ray-curable yellow ink is set as a homopolymer is 20°C to 50°C.
<5> The active energy ray-curable yellow ink according to any one of <1> to <4>,
   in which a mass ratio of a content of the polymerizable monomer A to a content of the polymerizable monomer B is 0.1 to 0.5.
<6> The active energy ray-curable yellow ink according to any one of <1> to <5>,
   in which the glass transition temperature in a case where the polymerizable monomer B is set as a homopolymer is 10°C or lower.
<7> The active energy ray-curable yellow ink according to any one of <1> to <6>, further comprising:
   a resin having a glass transition temperature of 40°C to 110°C.
<8> The active energy ray-curable yellow ink according to <7>,
   in which the resin having a glass transition temperature of 40°C to 110°C is a (meth)acrylic resin having a glass transition temperature of 40°C to 110°C.
<9> The active energy ray-curable yellow ink according to <8>,
   in which a content of the (meth)acrylic resin having a glass transition temperature of 40°C to 110°C is 0.2% by mass to 2.0% by mass with respect to the total amount of the active energy ray-curable yellow ink.
<10> The active energy ray-curable yellow ink according to any one of <1> to <9>,
   in which the yellow pigment is Pigment Yellow 184.
<11> An image recording method comprising:
   a step of applying the active energy ray-curable yellow ink according to any one of <1> to <10> onto a substrate by an ink jet recording method; and
   a step of irradiating the active energy ray-curable yellow ink applied onto the substrate with an active energy ray.

According to an embodiment of the present disclosure, there are provided an active energy ray-curable yellow ink and an image recording method, with which a yellow image having excellent color fading resistance, crack resistance, and blocking resistance after a long period of time can be recorded while color developability as a yellow pigment is maintained.

### DESCRIPTION OF THE PREFERRED EMBODIMENTS

Hereinafter, the contents of the present disclosure will be described in more detail.

The description of constituent elements below is made based on representative embodiments of the present disclosure in some cases, but the present disclosure is not limited to such embodiments.

In the present disclosure, a term "to" showing a range of numerical values is used as a meaning including a lower limit value and an upper limit value disclosed before and after the term.
In a range of numerical values described in stages in the present disclosure, the upper limit value or the lower limit value described in one range of numerical values may be replaced with an upper limit value or a lower limit value of the range of numerical values described in other stages. In addition, in a range of numerical values described in the present disclosure, the upper limit value or the lower limit value of the range of numerical values may be replaced with values illustrated in the examples.

In the present disclosure, in a case where a plurality of substances corresponding to individual components are present in a composition, unless otherwise specified, the amount of each component in the composition means the total amount of the plurality of components present in the composition.

In the present disclosure, either or both of acrylic and methacrylic may be referred to as "(meth)acrylic". For example, "(meth)acrylic acid" includes both acrylic acid and methacrylic acid.
In the present disclosure, either or both of acrylate and methacrylate may be referred to as "(meth)acrylate".

In the present disclosure, the term "step" includes not only an independent step, but also a step that may not be clearly distinguished from other steps but still achieves a desired effect of the step.

Compounds not specified as substituted or unsubstituted in the present disclosure may have any substituent as long as the effects in the present disclosure are not impaired.

In the present disclosure, a combination of preferable aspects is the more preferable aspect.

In the present disclosure, "Pigment Yellow" means C. I. (Color index) Pigment Yellow.

In the present disclosure, "Pigment Yellow" may be referred to as "PY".

An active energy ray-curable yellow ink (hereinafter, also simply referred to as "ink") of the present disclosure contains at least one yellow pigment selected from the group consisting of Pigment Yellow 110 and Pigment Yellow 184, a polymerizable monomer A which has a glass transition temperature higher than 60°C in a case of being a homopolymer and contains a nitrogen atom, and a polymerizable monomer B which has a glass transition temperature of 60°C or lower in a case of being a homopolymer and is a monofunctional polymerizable monomer, in which a total content of the polymerizable monomer A and the polymerizable monomer B is 50% by mass or more with respect to a total amount of the ink, and in a case where a content of the yellow pigment with respect to the total amount of the ink is denoted as Mp and a specific gravity of the yellow pigment is denoted as D, Mp/D is 1.0 to 2.0.

According to the ink of the present disclosure, it is possible to record a yellow image having excellent long-term weather fastness (fading resistance, crack resistance, and blocking resistance) while maintaining color developability as a yellow pigment.

Hereinafter, the description will be made simply as "fading resistance, crack resistance, and blocking resistance", but all of these mean fading resistance, crack resistance, and blocking resistance as long-term weather fastness.

Since the ink of the present disclosure contains at least one selected from the group consisting of Pigment Yellow 110 and Pigment Yellow 184 as a yellow pigment, the color developability is excellent.

In the ink of the present disclosure, the polymerizable monomer A which has a glass transition temperature higher than 60°C in a case of being a homopolymer and contains a nitrogen atom contributes to improvement of the blocking resistance. It is considered that this is because, in a case where the polymerizable monomer A is contained, the surface curing properties of the formed ink film are excellent. In a case where the ink film is exposed to light or the like outdoors, decomposition of components contained in the ink film proceeds, and stickiness is likely to occur on the surface of the ink film. However, in a case where the surface curing properties of the ink film are excellent, the stickiness is suppressed.

In addition, in the ink of the present disclosure, the polymerizable monomer B which has a glass transition temperature of 60°C or lower in a case of being a homopolymer and is a monofunctional polymerizable monomer contributes to improvement of the crack resistance. It is considered that this is because, in a case where the polymerizable monomer B is contained, flexibility can be imparted to the formed ink film.

Since the total content of the polymerizable monomer A and the polymerizable monomer B having the above-described actions is 50% by mass or more with respect to the total amount of the ink, the blocking resistance and the crack resistance are excellent.

Further, in a case where the content of the yellow pigment with respect to the total amount of the ink is defined as Mp and the specific gravity of the yellow pigment is defined as D, Mp/D is 1.0 to 2.0, and thus the blocking resistance and the crack resistance are excellent. It is considered that this is because, in a case where Mp/D is 1.0 to 2.0, the yellow pigment is appropriately unevenly distributed on the surface of the ink film.

On the other hand, WO2008/038508A does not describe a combination of the polymerizable monomer A and the polymerizable monomer B. In addition, JP2017-149811A does not describe that the total content of the polymerizable monomer A and the polymerizable monomer B is 50% by mass or more.

### [Active energy ray-curable yellow ink]

The ink of the present disclosure is an active energy ray-curable yellow ink. That is, the ink according to the embodiment of the present disclosure is cured by irradiation with an active energy ray. Examples of the active energy ray include γ-rays, β-rays, electron beams, ultraviolet rays, and visible rays. Among these, ultraviolet rays are preferable as the active energy ray. The ink of the present disclosure is preferably an ultraviolet-curable yellow ink.

Hereinafter, each component contained in the ink according to the present disclosure will be described in detail.

### <Yellow pigment>

The ink of the present disclosure contains at least one yellow pigment (hereinafter, also referred to as "specific yellow pigment") selected from the group consisting of Pigment Yellow 110 (PY110) and Pigment Yellow 184 (PY184). PY110 and PY184 have excellent color developability.

PY184 is a yellow inorganic pigment consisting of bismuth vanadate. PY184 may be a commercially available product.

Examples of the commercially available product include SICOPALL1100, SICOPALL1110, SICOPALL1120, and SICOPALL1600 (all of which are manufactured by BASF SE), and LYSOPAC Yellow 6601B, LYSOPAC Yellow 6611B, LYSOPAC Yellow 6615B, and LYSOPAC Yellow 6616B (all of which are manufactured by Cappelle).

PY110 is a yellow pigment consisting of isoindolinone. PY110 may be a commercially available product.

Examples of the commercially available product include Irgazin Yellow L 2040 (manufactured by DIC Corporation).

The smaller the average particle diameter of the pigment, the more excellent the color developability. A volume average particle diameter of the specific yellow pigment is preferably 0.01 µm to 0.4 µm and more preferably 0.02 µm to 0.3 µm.

In the present disclosure, the volume average particle diameter indicates a value measured using a laser diffraction scattering particle size distribution analyzer.

Examples of the measuring device include a particle size distribution measuring device "Microtrac MT-3300II" (manufactured by Nikkiso Co., Ltd.).

From the viewpoint of image density, a content of the specific yellow pigment is preferably 1% by mass to 15% by mass and more preferably 2% by mass to 10% by mass with respect to the total amount of the ink.

The content of the specific yellow pigment is adjusted to satisfy a range of Mp/D described later.

### (Mp/D)

In the ink according to the present disclosure, in a case where the content of the specific yellow pigment with respect to the total amount of the ink is denoted by Mp and the specific gravity of the specific yellow pigment is denoted by D, Mp/D is 1.0 to 2.0.

The specific gravity of the yellow pigment is measured by a true density measuring device "Ultrapyc 5000 series" manufactured by Anton Paar Japan.

In a case where the ink according to the present disclosure contains both PY110 and PY184, the specific gravity of the specific yellow pigment is represented by a weighted average value.

In a case where Mp/D is 1.0 or more, the yellow pigment is appropriately present on the surface of the ink film, and thus the blocking resistance is improved.

In a case where Mp/D is 2.0 or less, the yellow pigment is not excessively present on the surface of the ink film, and the crack resistance is improved.

From the viewpoint of further improving the blocking resistance and the crack resistance, Mp/D is preferably 1.2 to 1.7.

PY184 has a larger specific gravity than PY110. Therefore, in a case where PY184 is used as the yellow pigment, the content in the ink can be increased in order to set Mp/D to 1.0 to 2.0 as compared with a case where PY110 is used.

From the viewpoint of achieving both the color developability and the crack resistance and the blocking resistance, the specific yellow pigment is preferably PY184.

The ink according to the present disclosure may contain a colorant other than the specific yellow pigment. However, in order to maintain the color of the yellow ink, it is preferable that the ink does not contain a colorant other than the specific yellow pigment.

### <Polymerizable monomer A>

The ink according to the present disclosure contains a polymerizable monomer A having a glass transition temperature of a homopolymer higher than 60°C and containing a nitrogen atom. In a case where the ink contains the polymerizable monomer A, the blocking resistance is improved.

The polymerizable monomer A is a monomer containing a polymerizable group. The polymerizable group is preferably an ethylenically unsaturated group, more preferably a vinyl group, an allyl group, or a (meth)acryloyl group, and still more preferably a (meth)acryloyl group.

A molecular weight of the polymerizable monomer A is preferably 1,000 or less, more preferably 500 or less, and still more preferably 400 or less. The lower limit value of the molecular weight is, for example, 100.

In a compound having a molecular weight of 1,000 or less, the molecular weight is calculated from the kind and the number of atoms constituting the compound.

From the viewpoint of further improving the blocking resistance, the glass transition temperature of the polymerizable monomer A is preferably 70°C or higher and more preferably 80°C or higher. The upper limit value of the glass transition temperature is, for example, 180°C.

The glass transition temperature of the polymerizable monomer as homopolymer is measured by the following method.

First, a homopolymer having a weight-average molecular weight of 10,000 to 20,000 is produced using the polymerizable monomer. A glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 µL, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The number of polymerizable groups included in the polymerizable monomer A may be only one or may be two or more. From the viewpoint of crack resistance, the number of polymerizable groups is preferably one. That is, the polymerizable monomer A is preferably a monofunctional polymerizable monomer.

Examples of the polymerizable monomer A include N-vinylcaprolactam, acryloylmorpholine, vinylmethyl oxazolidinone, N-vinylpyrrolidone, N-isopropylacrylamide, and N,N-dimethylacrylamide.

A content of the polymerizable monomer A is preferably 1% by mass to 60% by mass, more preferably 5% by mass to 40% by mass, and still more preferably 10% by mass to 30% by mass with respect to the total mass of the ink.

In a case where the content of the polymerizable monomer A is 1% by mass or more, the blocking resistance is excellent due to the surface curing properties of the ink film.

In a case where the content of the polymerizable monomer A is 60% by mass or less, the ink film is not excessively hard, and the crack resistance is excellent.

### <Polymerizable monomer B>

The ink according to the present disclosure contains a polymerizable monomer B which is a monofunctional polymerizable monomer and has a glass transition temperature of 60°C or lower in a case of being used as a homopolymer. In a case where the ink contains the polymerizable monomer B, the crack resistance is improved.

The polymerizable monomer B is a monomer (monofunctional polymerizable monomer) containing one polymerizable group. The polymerizable group is preferably an ethylenically unsaturated group, more preferably a vinyl group, an allyl group, or a (meth)acryloyl group, and still more preferably a (meth)acryloyl group.

The molecular weight of the polymerizable monomer B is preferably 1,000 or less, more preferably 500 or less, and still more preferably 400 or less. The lower limit value of the molecular weight is, for example, 100.

From the viewpoint of further improving the blocking resistance, the glass transition temperature of the polymerizable monomer B is preferably 40°C or lower and more preferably 10°C or lower. The lower limit value of the glass transition temperature is, for example, -60°C.

Examples of the polymerizable monomer B include cyclic trimethylolpropane formal acrylate (CTFA), cyclohexyl acrylate (CHA), tetrahydrofurfuryl acrylate (THFA), (2-methyl-2-ethyl-1,3-dioxolan-4-yl)methyl acrylate (MEDOL-10), and benzyl acrylate (BzA).

The content of the polymerizable monomer B is preferably 10% by mass to 90% by mass, more preferably 20% by mass to 80% by mass, and still more preferably 30% by mass to 70% by mass with respect to the total mass of the ink.

In a case where the content of the polymerizable monomer B is 10% by mass or more, the crack resistance is excellent due to the flexibility of the ink film.

In a case where the content of the polymerizable monomer B is 90% by mass or less, the surface curing properties are maintained, and the blocking resistance is excellent.

The total content of the polymerizable monomer A and the polymerizable monomer B is 50% by mass or more and preferably 60% by mass or more with respect to the total amount of the ink. The upper limit value of the total content is not particularly limited, but is preferably 80% by mass from the viewpoint of the balance with other components.

In the ink according to the present disclosure, since the total content of the polymerizable monomer A and the polymerizable monomer B is 50% by mass or more, both the crack resistance and the blocking resistance can be achieved.

From the viewpoint of further improving the crack resistance and the blocking resistance, the mass ratio of the content of the polymerizable monomer A to the content of the polymerizable monomer B is preferably 0.1 to 0.5 and more preferably 0.2 to 0.4.

### <Other polymerizable monomers>

The ink according to the present disclosure may contain other polymerizable monomers in addition to the polymerizable monomer A and the polymerizable monomer B.

The other polymerizable monomers are preferably radically polymerizable monomers and more preferably ethylenically unsaturated monomers.

Examples of the other polymerizable monomers include a (meth)acrylate compound, a (meth)acrylamide compound, a vinyl ether compound, an allyl compound, an N-vinyl compound, and unsaturated carboxylic acids.

As the other polymerizable monomers, the radically polymerizable monomers described in JP2009-221414A, the radically polymerizable compounds described in JP2009-209289A, the ethylenically unsaturated compounds described in JP2009-191183A, and the like may be used.

The other radically polymerizable monomers are preferably a (meth)acrylate compound or a vinyl ether compound.

The other polymerizable monomers may be monofunctional polymerizable monomers or bifunctional or higher functional polymerizable monomers.

The ink according to the present disclosure preferably contains a bifunctional or higher functional polymerizable monomer as the other polymerizable monomers, more preferably contains a bifunctional or trifunctional radically polymerizable monomer, and still more preferably contains a bifunctional radically polymerizable monomer.

From the viewpoint of further improving the crack resistance and the blocking resistance, a weighted average value of the glass transition temperatures in a case where all the polymerizable monomers contained in the ink are homopolymers is preferably 20°C to 70°C and more preferably 20°C to 50°C.

The weighted average value of the glass transition temperatures is calculated by the following expression. In the expression, Tᵢ represents a glass transition temperature in a case where an i-th polymerizable monomer contained in the ink is a homopolymer, and Cᵢ represents a content (% by mass) of the i-th polymerizable monomer with respect to the total amount of the ink.$Weighted average value of glass transition temperatures = Σ {T}_{i} {C}_{i} / Σ {C}_{i}$

By adjusting the glass transition temperatures and the contents of the polymerizable monomer A, the polymerizable monomer B, and the other polymerizable monomers, the weighted average value of the glass transition temperatures can be adjusted to be in the above-described range.

### <Resin>

The ink according to the present disclosure preferably contains at least one resin. The resin here does not have a function of dispersing a yellow pigment and is distinguished from a dispersant described later.

It is considered that, in a case where the ink contains a resin, the decomposition of the crosslinking structure formed of the polymerizable monomer A and the polymerizable monomer B is suppressed by the resin present on the surface of the ink film. Therefore, in a case where the ink contains a resin, the blocking resistance is improved.

The weight-average molecular weight of the resin is not particularly limited, but from the viewpoint of further improving the crack resistance and the blocking resistance, it is preferably 1,000 or more, more preferably 3,000 or more, and still more preferably 5,000 or more. On the other hand, from the viewpoint of jettability and storage stability of the ink, the weight-average molecular weight of the resin is preferably 80,000 or less, more preferably 60,000 or less, and still more preferably 40,000 or less.

The method of measuring the weight-average molecular weight is as described above.

Examples of the resin include a vinyl resin, a (meth)acrylic resin, a urethane resin, and a polyester resin.

Among these, from the viewpoint of crack resistance, the resin is preferably a (meth)acrylic resin.

In the present disclosure, the (meth)acrylic resin means a resin containing a constitutional unit derived from a compound having a (meth)acryloyl group (for example, (meth)acrylic acid ester).

From the viewpoint of improving the crack resistance and the blocking resistance, the glass transition temperature of the resin is preferably 30°C to 120°C and more preferably 40°C to 110°C.

A measuring method of the glass transition temperature is as described above.

In particular, from the viewpoint of further improving the crack resistance and the blocking resistance, the ink according to the present disclosure preferably contains a resin having a glass transition temperature of 40°C to 110°C (hereinafter, also referred to as "specific resin").

From the viewpoint of crack resistance, the specific resin is preferably a (meth)acrylic resin having a glass transition temperature of 40°C to 110°C.

From the viewpoint of further improving the crack resistance and the blocking resistance, the glass transition temperature of the specific resin is preferably 50°C to 80°C.

The content of the specific resin is preferably 0.2% by mass to 2.0% by mass and more preferably 0.5% by mass to 1.5% by mass with respect to the total amount of the ink.

In a case where the content of the specific resin is 0.2% by mass or more, the blocking resistance is excellent.

In a case where the content of the specific resin is 2.0% by mass or less, the jettability is excellent.

### <Dispersant>

The ink according to the present disclosure preferably contains a dispersant in order to disperse the specific yellow pigment in the ink.

As the dispersant, a known dispersant can be used.

The dispersant may be a commercially available product. Examples of the commercially available product thereof include:
DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (all manufactured by BYK Chemie GmbH); and
SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (all manufactured by Lubrizol Corporation).

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a dispersing machine.

From the viewpoint of dispersion stability, a mass ratio of the content of the dispersant to the content of the specific yellow pigment is preferably 0.05 to 1.0 and more preferably 0.1 to 0.5.

### <Polymerization initiator>

The ink according to the present disclosure preferably contains at least one polymerization initiator.

As the polymerization initiator, a photoradical polymerization initiator which absorbs light to generate a radical as a polymerization initiation species is preferable.

Examples of the polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Among these, the polymerization initiator is preferably at least one selected from the group consisting of an alkylphenone compound and an acylphosphine compound, and it is more preferably a combination of an alkylphenone compound and an acylphosphine compound.

Examples of the alkylphenone compound include an α-hydroxyalkylphenone compound, an α-aminoalkylphenone compound, and a benzyl ketal alkylphenone compound.

Examples of the α-hydroxyalkylphenone compound include 2,2'-dihydroxy-2,2'-dimethyl-1,1'-[methylenebis(4,1-phenylene)]bis(propan-1-one), 1-[4-(2-hydroxyethoxy)phenyl]-2-methyl-2-hydroxy-1-propanone, 2-hydroxy-2-methyl-1-phenylpropan-1-one, and 1-hydroxycyclohexylphenyl ketone.

Examples of the α-aminoalkylphenone compound include 2-methyl-1-phenyl-2-morpholinopropan-1-one, 2-methyl-1-[4-(hexyl)phenyl]-2-morpholinopropan-1-one, 2-ethyl-2-dimethylamino-1-(4-morpholinophenyl)butan-1-one, 2-benzyl-2-dimethylamino-1-(4-morpholinophenyl)-butan-1-one, 2-dimethylamino-2-(4-methylbenzyl)-1-(4-morpholin-4-yl-phenyl)-butan-1-one, 2-methyl-1-[4-(methylthio)phenyl]-2-morpholinopropan-1-one, 2-(dimethylamino)-2-(4-methylbenzyl)-1-(4-morpholinophenyl)-butan-1-one, and 2-(dimethylamino)-2-[(4-methylphenyl)methyl]-1-[4-(4-morpholinyl)phenyl]-butan-1-one.

Examples of the benzyl ketal alkylphenone compound include 2,2-dimethoxy-2-phenylacetophenone.

The alkylphenone compound may be a commercially available product. Examples of the commercially available product include Omnirad 651, Omnirad 184, Omnirad 1173, Omnirad 2959, Omnirad 127, Omnirad 907, Omnirad 369, Omnirad 369E, and Omnirad 379 (manufactured by IGM Resins B.V.).

Examples of the acylphosphine oxide compound include a monoacylphosphine oxide compound and a bisacylphosphine oxide compound. The acylphosphine oxide compound is preferably a bisacylphosphine oxide compound.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, it is preferable to include at least one selected from the group consisting of bis(2,4,6-trimethylbenzoyl)phenylphosphine oxide (product name "Omnirad 819", manufactured by IGM Resins B.V.) and 2,4,6-trimethylbenzoyldiphenylphosphine oxide (product name "Omnirad TPO-H", manufactured by IGM Resins B.V.).

In a case where the ink contains a polymerization initiator, from the viewpoint of improving the curing properties of the ink, a content of the polymerization initiator is preferably 2% by mass or more and more preferably 5% by mass or more with respect to the total amount of the ink. The upper limit of the content of the polymerization initiator is not particularly limited, but for example, it is 10% by mass.

### <Surfactant>

The ink preferably contains at least one surfactant. As the surfactant, a known surfactant can be used.

In a case where the ink contains a surfactant, a content of the surfactant is preferably 0.1% by mass to 2.0% by mass and more preferably 0.5% by mass to 1.5% by mass with respect to the total amount of the ink.

### <Polymerization inhibitor>

The ink according to the present disclosure preferably contains at least one polymerization inhibitor.

Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).

Among these, as the polymerization inhibitor, it is preferable to include at least one selected from the group consisting of p-methoxyphenol, catechols, quinones, alkylphenols, TEMPO, TEMPOL, and tris(N-nitroso-N-phenylhydroxylamine)aluminum salt; and it is more preferable to include at least one selected from the group consisting of p-methoxyphenol, hydroquinone, benzoquinone, BHT, TEMPO, TEMPOL, and tris(N-nitroso-N-phenylhydroxylamine)aluminum salt.

In a case where the ink contains a polymerization inhibitor, a content of the polymerization inhibitor is preferably 0.01% by mass to 2.0% by mass, more preferably 0.02% by mass to 1.0% by mass, and still more preferably 0.03% by mass to 0.5% by mass with respect to the total amount of the ink.

### <Additives>

The ink according to the present disclosure may contain an additive such as a co-sensitizer, an ultraviolet absorber, an antioxidant, an antifading agent, a conductive salt, a solvent, and a basic compound, as necessary.

### <Physical properties>

A viscosity of the ink is preferably 0.5 mPa·s to 50 mPa·s, more preferably 5 mPa·s to 40 mPa·s, still more preferably 7 mPa·s to 35 mPa·s, and particularly preferably 8 mPa·s to 30 mPa·s. The viscosity is measured at 25°C by using a viscometer, for example, a TV-22 viscometer manufactured by TOKISANGYO.

A surface tension of the ink is preferably 60 mN/m or less, more preferably 20 mN/m to 50 mN/m, and still more preferably 25 mN/m to 45 mN/m. The surface tension is measured at 25°C by a plate method using a surface tension meter, for example, an automatic surface tension meter (product name, "CBVP-Z", manufactured by Kyowa Interface Science Co., Ltd.).

### [Image recording method]

The image recording method according to the present disclosure includes a step of applying the ink according to the present disclosure described above onto a substrate to record an image (hereinafter, also referred to as "ink applying step") and a step of irradiating the ink applied onto the substrate with an active energy ray (hereinafter, also referred to as "active energy ray irradiating step").

The image recording method of the present disclosure may include other steps as necessary.

Since the image recording method of the present disclosure records an image by using the ink of the present disclosure, the same effect as that obtained by the ink of the present disclosure can be obtained by the image recording method of the present disclosure.

### <Ink applying step>

A method of applying the ink is not particularly limited, and examples thereof include known methods such as a coating method, an ink jet recording method, and an immersion method.

### (Substrate)

The type of the substrate is not particularly limited, and a generally known substrate can be used as the substrate. Examples of the substrate include glass, quartz, and a plastic film. Examples of a resin constituting the plastic film include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene, polystyrene, polypropylene, a polycycloolefin, a polyimide, a polycarbonate, and polyvinyl acetal. The plastic film may be a film containing only one of these resins or a film mixing two or more of these resins.

A thickness of the substrate is not particularly limited, but is, for example, 1 µm to 10 mm. In a case where the substrate is a film, a thickness thereof is preferably 1 µm to 500 µm, more preferably 2 µm to 200 µm, still more preferably 5 µm to 100 µm, and particularly preferably 10 µm to 90 µm. In addition, in a case where the substrate is glass, a thickness thereof is preferably 0.1 mm to 10 mm, more preferably 0.15 mm to 8 mm, and still more preferably 0.2 mm to 5 mm.

### (Ink jet recording method)

The ink jet recording method is not particularly limited as long as it is a method capable of recording an image, and a known method can be used. Examples of the ink jet recording method include an electric charge control method of ejecting ink by using an electrostatic attraction force; a drop-on-demand method (pressure pulse method) of using a vibration pressure of a piezoelectric element; an acoustic inkjet method of converting an electric signal into an acoustic beam, irradiating ink, and ejecting the ink using a radiation pressure; and a thermal inkjet (Bubble jet (registered trademark)) method of heating ink to form air bubbles and utilizing the generated pressure.

Examples of ink jet heads used in the ink jet recording method include ink jet heads for a shuttle method of using short serial heads that are caused to scan a substrate in a width direction of the substrate to perform recording and ink jet heads for a line method of using line heads that each consist of recording elements arranged for the entire area of each side of a substrate.

In the line method, pattern formation can be performed on the entire surface of a substrate by scanning the substrate in a direction perpendicular to a direction in which the recording elements are arranged, and a transport system such as a carriage that scans a short head is unnecessary. In addition, in the line method, complicated scanning control for moving a carriage and a substrate is not necessary, and only a substrate moves. Therefore, the recording speed can be further increased in the line method than in the shuttle method.

A liquid droplet volume of the ink jetted from the inkjet head is preferably 1 pL (picoliter) to 100 pL, more preferably 3 pL to 80 pL, and still more preferably 3 pL to 50 pL.

### <Active energy ray irradiating step>

Examples of the active energy ray include γ-rays, β-rays, electron beams, ultraviolet rays, and visible rays. Among these, ultraviolet rays are preferable as the active energy ray.

A peak wavelength of the ultraviolet rays is, for example, preferably 200 nm to 405 nm, more preferably 250 nm to 400 nm, and still more preferably 300 nm to 400 nm.

As a light source for the ultraviolet irradiation, a mercury lamp and various lasers such as a gas laser and a solid-state laser are mainly used, and a mercury lamp and discharge lamps such as a metal halide lamp and an ultraviolet fluorescent lamp are widely known light sources. In addition, a semiconductor light source such as ultraviolet light emitting diode (UV-LED) or ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

An irradiation energy (that is, an exposure amount) of the active energy ray is preferably 100 mJ/cm² to 4,000 mJ/cm² and more preferably 200 mJ/cm² to 2,000 mJ/cm². Examples

Hereinafter, examples of the present disclosure will be described, but the present disclosure is not limited to the following examples.

### <Preparation of yellow pigment dispersion liquid 1>

The following raw materials were mixed, and the mixture was stirred at 2,500 rpm for 10 minutes using a mixer (L4R manufactured by Silverson) to obtain a mixture. Thereafter, the obtained mixture was put into a bead mill disperser (DISPERMAT LS (manufactured by VMA-Getzmann)), and using a YTZ ball (manufactured by Nikkato Corporation) having a diameter of 0.65 mm, a dispersion treatment was performed at 2,500 rpm for 6 hours to obtain a yellow pigment dispersion liquid 1.
· PY184: product name "Sicopal Yellow L 1100" (manufactured by DIC Corporation) ... 40 parts by mass
· Dispersant: product name "SOLSPERSE 32000" (manufactured by Lubrizol Japan Ltd.) ... 20 parts by mass
· DVE-3: triethylene glycol divinyl ether (manufactured by Tokyo Chemical Industry Co., Ltd.) ... 39 parts by mass
· FLORSTAB UV12 ... 1.0 part by mass (polymerization inhibitor; cupferron Al, manufactured by Kromachem Ltd.)

### <Preparation of yellow pigment dispersion liquid 2>

A yellow pigment dispersion liquid 2 was obtained by the same method as the yellow pigment dispersion liquid 1, except that PY184 was changed to PY110 (product name "Irgazin Yellow L 2040", manufactured by DIC Corporation).

### <Preparation of yellow pigment dispersion liquid 3>

A yellow pigment dispersion liquid 3 was obtained by the same method as the yellow pigment dispersion liquid 1, except that PY184 was changed to PY120 (product name "PV FAST YELLOW H2G", manufactured by Hoechst AG).

### <Preparation of yellow pigment dispersion liquid 4>

A yellow pigment dispersion liquid 4 was obtained by the same method as the yellow pigment dispersion liquid 1, except that PY184 was changed to PY151 (product name "SYMULER FAST YELLOW 4GO", manufactured by DIC Corporation).

### [Examples 1 to 20 and Comparative Examples 1 to 7]

A yellow ink was prepared using the yellow pigment dispersion liquid such that the content (% by mass) of each component shown in Tables 1 to 3 was as shown in Tables 1 to 3.

In an example in which PY184 was contained as the yellow pigment, the yellow pigment dispersion liquid 1 was used.

In an example in which PY110 was contained as the yellow pigment, the yellow pigment dispersion liquid 2 was used.

In an example in which PY120 was contained as the yellow pigment, the yellow pigment dispersion liquid 3 was used.

In an example in which PY151 was contained as the yellow pigment, the yellow pigment dispersion liquid 4 was used.

The details of each component in Tables 1 to 3 are as follows.

### (Polymerizable monomer A)

· NVC: N-vinylcaprolactam
· ACMO: acryloylmorpholine
· VMOX: vinylmethyloxazolidinone

### (Polymerizable monomer B)

· CTFA: cyclic trimethylolpropane formal acrylate
· CHA: cyclohexyl acrylate
· BzA: benzyl acrylate
· MEDOL-10: (2-methyl-2-ethyl-1,3-dioxolan-4-yl)methyl acrylate

### (Other polymerizable monomers)

· IBOA: isobornyl acrylate
· DVE-3: triethylene glycol divinyl ether
· 3MPDDA: 3-methyl-1.5-pentanediol diacrylate

### (Resin)

· Acrylic resin 1: Dianal BR-113 (manufactured by Mitsubishi Chemical Corporation), Tg: 75°C, weight-average molecular weight: 30,000
· Acrylic resin 2: Dianal BR-117 (manufactured by Mitsubishi Chemical Corporation), Tg: 34°C, weight-average molecular weight: 140,000
· Acrylic resin 3: ARUFON UC-3080 (manufactured by Toagosei Co., Ltd.), Tg: 133°C, weight-average molecular weight: 14,000
· Polyester resin: DIAKRON FC-1588 (manufactured by Mitsubishi Chemical Corporation), Tg: 53°C, weight-average molecular weight: 30,000

### (Polymerization initiator)

· Omnirad 184: 1-hydroxycyclohexyl-phenyl ketone, manufactured by IGM Resins B.V.
· Omnirad 819: bis(2,4,6-trimethylbenzoyl)phenylphosphine oxide, manufactured by IGM Resins B.V.
· Omnirad TPO-H: 2,4,6-trimethylbenzoyldiphenylphosphine oxide, manufactured by IGM Resins B.V.

### (Polymerization inhibitor)

· UV12: manufactured by Kromachem Ltd.

(Surfactant)
· BYK-307: silicone surfactant, manufactured by BYK Chemie

### (Yellow pigment)

· PY110: specific gravity of 1.81
· PY184: specific gravity of 5.6
· PY120: specific gravity of 1.52
· PY151: specific gravity of 1.55

### <Image recording>

A polycarbonate substrate was prepared as a substrate.

A UV ink jet printer (product name "UJF3042HG", manufactured by MIMAKI ENGINEERING CO., LTD.) was filled with the prepared yellow ink. The yellow ink was jetted from the ink jet head to record a solid image on the substrate, thereby obtaining an image recorded material. A resolution was set to 1200 dots per inch (dpi) × 600 dpi. The exposure amount of ultraviolet rays was set to 1100 mJ/cm².

### <Evaluations>

The following evaluations were carried out on the above-described image recorded material and the above-described yellow ink.

### (Long-term weather fastness)

The produced image recorded material was irradiated with a metal halide lamp for 500 hours using an accelerated weather fastness tester (product name "Eye Super UV tester SUV-W161", manufactured by IWASAKI ELECTRIC CO., LTD.) to obtain an image recorded material after the test.

Hereinafter, the produced image recorded material is referred to as "image recorded material M0", and the image recorded material after the test is referred to as "image recorded material M1".

### -Fading resistance-

For the image recorded material M0 and the image recorded material M1, CIE Lab values (L*, a*, and b*) were measured using a spectrophotometer (product name "CM-2600d", manufactured by Konica Minolta, Inc.) under the conditions of a light source D65, an angle of view of 2°, and SCE (specular light removal). Based on the measurement results, a color difference ΔE was calculated. The fading resistance was evaluated based on the color difference ΔE.

In a case where the color difference ΔE is 3.0 or less, a change in color is not recognized by the human eye. The evaluation standards are as follows.
A: ΔE is 1.0 or less.
B: ΔE is more than 1.0 and 2.0 or less.
C: ΔE is more than 2.0 and 3.0 or less.
D: ΔE is more than 3.0.

### -Crack resistance-

The image recorded material M1 was observed visually and with an optical microscope. The evaluation standards are as follows.
A: No fissuring occurred in the image.
B: Fissuring occurred in the image, but the image was not peeled off from the substrate.
C: Fissuring occurred in the image, and a part of the image was peeled off from the substrate.
D: Fissuring occurred in the image, and most of the image was peeled off from the substrate.

### -Blocking resistance-

The presence or absence of stickiness of the surface of the image recorded material M1 was confirmed.

In addition, the entire image in the image recorded material M1 was overlaid with coated paper (product name "OK TOPCOAT+", manufactured by Oji Paper Co., Ltd.) and left to stand for 1 day. After the standing, the presence or absence of transfer of the image from the image recorded material M1 to the coated paper was confirmed. The evaluation standards are as follows.
A: No stickiness occurred on the surface of the image, and no transfer of the image occurred.
B: The surface of the image was slightly sticky, but no transfer of the image occurred.
C: The image was slightly transferred.
D: The image was transferred.

### (Color developability)

The yellow density of the image in the image recorded material M0 was measured using a spectrophotometer (product name "FD-7", manufactured by Konica Minolta, Inc.). The evaluation standards are as follows.
A: The yellow density was 0.6 or more.
B: The yellow density was 0.4 or more and less than 0.6.
C: The yellow density was less than 0.4.

### (Jettability)

Using a UV ink jet printer (product name "UJF3042HG", manufactured by MIMAKI ENGINEERING CO., LTD.), after adjusting the number of non-jetting nozzles to be 0, the presence or absence of dot omission and ink scattering was visually observed in a case where printing was continuously performed for 1 hour at normal temperature (25°C). An average value of the results of performing this operation three times was calculated. The evaluation standards are as follows.
A: There was no dot omission or ink scattering, or the number of sites where dot omission or ink scattering occurred was less than 1.
B: The number of sites where dot omission or ink scattering occurred was 1 or more and less than 2.
C: The number of sites where dot omission or ink scattering occurred was 2 or more and less than 6.
D: The number of sites where dot omission or ink scattering occurred was 6 or more.

The evaluation results are shown in Tables 1 to 3.

In the tables, "Mp/D" means a ratio in a case where the content of the yellow pigment is denoted by Mp and the specific gravity of the yellow pigment is denoted by D.

"Polymerizable monomer A + polymerizable monomer B" means the total content of the polymerizable monomer A and the polymerizable monomer B.

"Polymerizable monomer A/polymerizable monomer B" means a mass ratio of the content of the polymerizable monomer A to the content of the polymerizable monomer B.

"Weighted average value of Tg" means a weighted average value of the glass transition temperatures in a case where all the polymerizable monomers contained in the ink are homopolymers.

**[Table 1]**

| | | Tg (°C) | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Polymerizable monomer A | NVC | 90 | 15 | - | - | 25 | 15 | 8 | 35 | 12 | 30 | 30 |
| | ACMO | 145 | - | 15 | - | - | - | - | - | - | - | - |
| | VMOX | 140 | - | - | 15 | - | - | - | - | - | - | - |
| Polymerizable monomer B | CTFA | 32 | - | - | - | - | 25 | - | - | - | 20 | 30 |
| | CHA | 15 | - | - | - | - | 24 | - | - | - | - | - |
| | BzA | 6 | 25 | 25 | 25 | 20 | - | 52 | 15 | 8 | - | 6 |
| | MEDOL-10 | -7 | 24 | 24 | 24 | 19 | - | 4 | 14 | 44 | - | - |
| Other polymerizable monomers | IBOA | 88 | - | - | - | - | - | - | - | - | 1 | - |
| | DVE-3 | 10 | 7.8 | 7.8 | 7.8 | 7.8 | 7.8 | 7.8 | 7.8 | 7.8 | 7.8 | 7.8 |
| | 3MPDDA | 105 | 7.2 | 7.2 | 7.2 | 7.2 | 7.2 | 7.2 | 7.2 | 7.2 | 20.2 | 5.2 |
| Resin | Acrylic resin 1 | 75 | 1 | 1 | 1 | 1 | 1 | 1 | 1 | 1 | 1 | 1 |
| Polymerization initiator | Omnirad184 | | 2 | 2 | 2 | 2 | 2 | 2 | 2 | 2 | 2 | 2 |
| | Omnirad819 | | 1.8 | 1.8 | 1.8 | 1.8 | 1.8 | 1.8 | 1.8 | 1.8 | 1.8 | 1.8 |
| | OmniradTPO-H | | 2 | 2 | 2 | 2 | 2 | 2 | 2 | 2 | 2 | 2 |
| Polymerization inhibitor | UV12 | | 0.2 | 0.2 | 0.2 | 0.2 | 0.2 | 0.2 | 0.2 | 0.2 | 0.2 | 0.2 |
| Dispersant | Solsperse32000 | | 5 | 5 | 5 | 5 | 5 | 5 | 5 | 5 | 5 | 5 |
| Surfactant | BYK307 | | 1 | 1 | 1 | 1 | 1 | 1 | 1 | 1 | 1 | 1 |
| Pigment yellow | PY184 | | 8 | 8 | 8 | 8 | 8 | 8 | 8 | 8 | 8 | 8 |
| Mp/D | | | 1.4 | 1.4 | 1.4 | 1.4 | 1.4 | 1.4 | 1.4 | 1.4 | 1.4 | 1.4 |
| Polymerizable monomer A + Polymerizable monomer B | | | 64 | 64 | 64 | 64 | 64 | 64 | 64 | 64 | 50 | 66 |
| Polymerizable monomer A / Polymerizable monomer B | | | 0.31 | 0.31 | 0.31 | 0.64 | 0.31 | 0.14 | 1.21 | 0.23 | 1.50 | 0.83 |
| Weighted average value of Tg (°C) | | | 27.4 | 36.9 | 35.9 | 37.9 | 41.3 | 22.3 | 49.3 | 19.9 | 70.5 | 53.7 |
| Evaluation | Fading resistance | | A | A | A | A | A | B | A | A | A | A |
| | Crack resistance | | A | A | A | B | B | B | B | A | C | B |
| | Blocking resistance | | A | A | A | A | A | C | A | B | A | B |
| | Color developability | | A | A | A | A | A | A | A | A | A | A |
| | Jettability | | A | A | A | B | A | A | B | A | B | A |

**[Table 2]**

| | | Tg (°C) | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Polymerizable monomer A | NVC | 90 | 5 | 15 | 15 | 15 | 15 | 15 | 15 | 15 | 15 | 15 |
| Polymerizable monomer B | CTFA | 32 | 20 | - | - | - | - | - | - | - | - | - |
| | BzA | 6 | 41 | 28.6 | 25 | 25 | 24 | 25 | 25 | 25 | 27 | 23 |
| | MEDOL-10 | -7 | - | 28 | 25 | 24.9 | 23 | 24 | 24 | 24 | 25.8 | 22 |
| Other polymerizable monomers | DVE-3 | 10 | 7.8 | 7.8 | 7.8 | 7.8 | 7.8 | 7.8 | 7.8 | 7.8 | 6 | 9.8 |
| | 3MPDDA | 105 | 5.2 | 5.1 | 7.2 | 7.2 | 7.2 | 7.2 | 7.2 | 7.2 | 7.2 | 7.2 |
| Resin | Acrylic resin 1 | 75 | 1 | 1 | - | 0.1 | 3 | - | - | - | 1 | 1 |
| | Acrylic resin 2 | 34 | - | - | - | - | - | 1 | - | - | - | - |
| | Acrylic resin 3 | 133 | - | - | - | - | - | - | 1 | - | - | - |
| | Polyester resin | 53 | - | - | - | - | - | - | - | 1 | - | - |
| Polymerization initiator | Omnirad 184 | | 2 | 2 | 2 | 2 | 2 | 2 | 2 | 2 | 2 | 2 |
| | Omnirad819 | | 1.8 | 1.8 | 1.8 | 1.8 | 1.8 | 1.8 | 1.8 | 1.8 | 1.8 | 1.8 |
| | OmniradTPO-H | | 2 | 2 | 2 | 2 | 2 | 2 | 2 | 2 | 2 | 2 |
| Polymerization inhibitor | UV12 | | 0.2 | 0.2 | 0.2 | 0.2 | 0.2 | 0.2 | 0.2 | 0.2 | 0.2 | 0.2 |
| Dispersant | Solsperse32000 | | 5 | 5 | 5 | 5 | 5 | 5 | 5 | 5 | 5 | 5 |
| Surfactant | BYK307 | | 1 | 1 | 1 | 1 | 1 | 1 | 1 | 1 | 1 | 1 |
| Pigment yellow | PY110 | | - | 2.5 | - | - | - | - | - | - | - | - |
| | PY184 | | 8 | - | 8 | 8 | 8 | 8 | 8 | 8 | 6 | 10 |
| Mp/D | | | 1.4 | 1.4 | 1.4 | 1.4 | 1.4 | 1.4 | 1.4 | 1.4 | 1.1 | 1.8 |
| Polymerizable monomer A + Polymerizable monomer B | | | 66 | 72 | 65 | 65 | 62 | 64 | 64 | 64 | 68 | 60 |
| Polymerizable monomer A / Polymerizable monomer B | | | 0.08 | 0.27 | 0.30 | 0.30 | 0.32 | 0.31 | 0.31 | 0.31 | 0.28 | 0.33 |
| Weighted average value of Tg (°C) | | | 23.8 | 22.0 | 26.0 | 26.1 | 27.1 | 26.4 | 26.4 | 26.4 | 26.5 | 28.4 |
| Evaluation | Fading resistance | | B | A | A | A | A | A | A | A | A | A |
| | Crack resistance | | A | A | A | A | A | A | B | A | A | B |
| | Blocking resistance | | B | B | C | C | A | B | A | B | A | A |
| | Color developability | | A | B | A | A | A | A | A | A | B | A |
| | Jettabilitv | | A | A | A | A | C | A | A | A | A | A |

**[Table 3]**

| | | Tg (°C) | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Polymerizable monomer A | NVC | 90 | 15 | 15 | 5 | - | 20 | 15 | 15 |
| Polymerizable monomer B | CTFA | 32 | - | - | - | 15 | - | - | - |
| | BzA | 6 | 29 | 29 | 20 | 25 | - | 18 | 28.1 |
| | MEDOL-10 | -7 | 28 | 28 | 20 | 24 | - | 17.1 | 29 |
| Other polymerizable monomers | IBOA | 88 | - | - | 19 | - | 14 | - | - |
| | DVE-3 | 10 | 7.8 | 7.8 | 7.8 | 7.8 | 37.8 | 13.7 | 4.9 |
| | 3MPDDA | 105 | 5.1 | 5.1 | 7.2 | 7.2 | 7.2 | 7.2 | 5 |
| Resin | Acrylic resin 1 | 75 | 1 | 1 | 1 | 1 | 1 | 1 | 1 |
| Polymerization initiator | Omnirad 184 | | 2 | 2 | 2 | 2 | 2 | 2 | 2 |
| | Omnirad819 | | 1.8 | 1.8 | 1.8 | 1.8 | 1.8 | 1.8 | 1.8 |
| | OmniradTPO-H | | 2 | 2 | 2 | 2 | 2 | 2 | 2 |
| Polymerization inhibitor | UV12 | | 0.2 | 0.2 | 0.2 | 0.2 | 0.2 | 0.2 | 0.2 |
| Dispersant | Solsperse32000 | | 5 | 5 | 5 | 5 | 5 | 7 | 5 |
| Surfactant | BYK307 | | 1 | 1 | 1 | 1 | 1 | 1 | 1 |
| Pigment yellow | PY184 | | - | - | 8 | 8 | 8 | 14 | 5 |
| | PY120 | | 2.1 | - | - | - | - | - | - |
| | PY151 | | - | 2.1 | - | - | - | - | - |
| Mp/D | | | 1.4 | 1.4 | 1.4 | 1.4 | 1.4 | 2.5 | 0.9 |
| Polymerizable monomer A + Polymerizable monomer B | | | 72 | 72 | 45 | 64 | 20 | 50 | 72 |
| Polymerizable monomer A / Polymerizable monomer B | | | 0.26 | 0.26 | 0.13 | 0 | - | 0.43 | 0.26 |
| Weighted average value of Tg (°C) | | | 21.9 | 21.9 | 36.2 | 15.4 | 47.9 | 29.5 | 22.4 |
| Evaluation | Fading resistance | | D | D | B | C | C | A | C |
| | Crack resistance | | A | A | C | C | D | D | B |
| | Blocking resistance | | C | C | D | D | C | B | D |
| | Color developability | | C | C | A | A | B | A | C |
| | Jettabilitv | | A | A | A | A | A | A | A |

As shown in Tables 1 to 3, in Examples 1 to 20, at least one yellow pigment selected from the group consisting of PY110 and PY184, a polymerizable monomer A, and a polymerizable monomer B were contained, the total content of the polymerizable monomer A and the polymerizable monomer B was 50% by mass or more with respect to the total amount of the ink, and Mp/D was 1.0 to 2.0, and thus it was found that the long-term weather fastness (fading resistance, crack resistance, and blocking resistance) was excellent.

On the other hand, in Comparative Examples 1 and 2, it was found that at least one yellow pigment selected from the group consisting of PY110 and PY184 was not contained, and the fading resistance was deteriorated.

In Comparative Example 3, it was found that the total content of the polymerizable monomer A and the polymerizable monomer B was less than 50% by mass, and the blocking resistance was deteriorated.

In Comparative Example 4, it was found that the polymerizable monomer A was not contained, and the blocking resistance was deteriorated.

In Comparative Example 5, it was found that the polymerizable monomer B was not contained, and the crack resistance was deteriorated.

In Comparative Example 6, it was found that Mp/D was more than 2.0, and the crack resistance was deteriorated.

In Comparative Example 7, it was found that Mp/D was less than 1.0, and the blocking resistance was deteriorated.

In Example 1, it was found that the content of the polymerizable monomer A was 10% by mass or more with respect to the total amount of the ink, and the blocking resistance was excellent as compared with Example 6.

In Example 1, it was found that the content of the polymerizable monomer A was 30% by mass or less with respect to the total amount of the ink, and the crack resistance and the jettability were excellent as compared with Example 7.

In Example 1, it was found that the weighted average value of the glass transition temperatures in a case where all the polymerizable monomers contained in the ink were homopolymers was 20°C or higher, and the blocking resistance was excellent as compared with Example 8.

In Example 1, it was found that the weighted average value of the glass transition temperatures in a case where all the polymerizable monomers contained in the ink were homopolymers was 70°C or lower, and the crack resistance was excellent as compared with Example 9.

In Example 1, it was found that the weighted average value of the glass transition temperatures in a case where all the polymerizable monomers contained in the ink were homopolymers was 50°C or lower, and the crack resistance and the blocking resistance were excellent as compared with Example 10.

In Example 1, it was found that the mass ratio of the content of the polymerizable monomer A to the content of the polymerizable monomer B was 0.1 or more, and the fading resistance and the blocking resistance were excellent as compared with Example 11.

In Example 1, it was found that the mass ratio of the content of the polymerizable monomer A to the content of the polymerizable monomer B was 0.5 or less, and the crack resistance and the jettability were excellent as compared with Example 4.

In Example 1, it was found that the polymerizable monomer B having a glass transition temperature of 10°C or lower was contained, and the crack resistance was excellent as compared with Example 5.

In Example 1, it was found that the polymerizable monomer B having a glass transition temperature of 10°C or lower was contained, and the crack resistance was excellent as compared with Example 5.

In Example 18, it was found that the resin having a glass transition temperature of 40°C to 110°C was contained, and the blocking resistance was excellent as compared with Example 13.

In Example 1, it was found that the (meth)acrylic resin having a glass transition temperature of 40°C to 110°C was contained, and the blocking resistance was excellent as compared with Example 18.

In Example 1, it was found that the content of the (meth)acrylic resin having a glass transition temperature of 40°C to 110°C was 0.2% by mass or more, and the blocking resistance was excellent as compared with Example 14.

In Example 1, it was found that the content of the (meth)acrylic resin having a glass transition temperature of 40°C to 110°C was 2.0% by mass or less, and the jettability was excellent as compared with Example 15.

In Example 1, it was found that the glass transition temperature of the (meth)acrylic resin was 40°C or higher, and the blocking resistance was excellent as compared with Example 16.

In Example 1, it was found that the glass transition temperature of the (meth)acrylic resin was 110°C or lower, and the crack resistance was excellent as compared with Example 17.

In Example 1, it was found that the yellow pigment was PY184, and the color developability and the blocking resistance were excellent as compared with Example 12.

The disclosure of Japanese Patent Application No. 2023-184792 filed on October 27, 2023 is incorporated in the present specification by reference. In addition, all documents, patent applications, and technical standards described in the present specification are herein incorporated by reference to the same extent that each individual document, patent application, or technical standard was specifically and individually indicated to be incorporated by reference.

## Claims

1. An active energy ray-curable yellow ink comprising:
at least one yellow pigment selected from the group consisting of Pigment Yellow 110 and Pigment Yellow 184;
a polymerizable monomer A that contains a nitrogen atom and has a glass transition temperature higher than 60°C in a case where the polymerizable monomer A is set as a homopolymer; and
a polymerizable monomer B that is a monofunctional polymerizable monomer and has a glass transition temperature of 60°C or lower in a case where the polymerizable monomer B is set as a homopolymer,
wherein a total content of the polymerizable monomer A and the polymerizable monomer B is 50% by mass or more with respect to a total amount of the active energy ray-curable yellow ink, and
in a case where a content of the yellow pigment with respect to the total amount of the active energy ray-curable yellow ink is denoted by Mp and a specific gravity of the yellow pigment is denoted by D, Mp/D is 1.0 to 2.0.

2. The active energy ray-curable yellow ink according to claim 1,
wherein a content of the polymerizable monomer A is 10% by mass to 30% by mass with respect to the total amount of the active energy ray-curable yellow ink.

3. The active energy ray-curable yellow ink according to claim 1,
wherein a weighted average value of glass transition temperatures in a case where each of all polymerizable monomers contained in the active energy ray-curable yellow ink is set as a homopolymer is 20°C to 70°C.

4. The active energy ray-curable yellow ink according to claim 1,
wherein a weighted average value of glass transition temperatures in a case where each of all polymerizable monomers contained in the active energy ray-curable yellow ink is set as a homopolymer is 20°C to 50°C.

5. The active energy ray-curable yellow ink according to claim 1,
wherein a mass ratio of a content of the polymerizable monomer A to a content of the polymerizable monomer B is 0.1 to 0.5.

6. The active energy ray-curable yellow ink according to claim 1,
wherein the glass transition temperature in a case where the polymerizable monomer B is set as a homopolymer is 10°C or lower.

7. The active energy ray-curable yellow ink according to claim 1, further comprising:
a resin having a glass transition temperature of 40°C to 110°C.

8. The active energy ray-curable yellow ink according to claim 7,
wherein the resin having a glass transition temperature of 40°C to 110°C is a (meth)acrylic resin having a glass transition temperature of 40°C to 110°C.

9. The active energy ray-curable yellow ink according to claim 8,
wherein a content of the (meth)acrylic resin having a glass transition temperature of 40°C to 110°C is 0.2% by mass to 2.0% by mass with respect to the total amount of the active energy ray-curable yellow ink.

10. The active energy ray-curable yellow ink according to claim 1,
wherein the yellow pigment is Pigment Yellow 184.

11. An image recording method comprising:
a step of applying the active energy ray-curable yellow ink according to any one of claims 1 to 10 onto a substrate by an ink jet recording method; and
a step of irradiating the active energy ray-curable yellow ink applied onto the substrate with an active energy ray.
